# EUROPÄISCHE PATENTSCHRIFT

(11) **EP 3 353 475 B1**
(45) Veröffentlichungstag und Bekanntmachung des Hinweises auf die Patenterteilung: **18.11.2020**
(21) Anmeldenummer: 16777552.7
(22) Anmeldetag: 16.09.2016
(51) Int. Cl.: F24H 1/12, F24H 3/04, F24H 3/06, F24H 9/20, G01K 1/14, G01K 1/16, H05B 3/22, B60H 1/00

(54) **WÄRMETAUSCHER UND FAHRZEUGHEIZGERÄT MIT EINEM WÄRMETAUSCHER**
HEAT EXCHANGER AND VEHICLE COMPRISING SUCH A HEAT EXCHANGER
ÉCHANGEUR DE CHALEUR ET VÉHICULE COMPRENANT LEDIT ÉCHANGEUR DE CHALEUR

(30) Priorität: 25.09.2015 DE 102015012557
(43) Veröffentlichungstag der Anmeldung: 01.08.2018
(73) Patentinhaber: Webasto SE, 82131 Stockdorf (DE)
(72) Erfinder: BUCKL, Stephan, 82131 Stockdorf (DE)
(74) Vertreter: Schumacher & Willsau
(86) Internationale Anmeldenummer: PCT/EP2016/072031
(87) Internationale Veröffentlichungsnummer: WO 2017/050661

(56) Entgegenhaltungen:
- GB-A- 2 116 809
- US-A1- 2007 166 017

## Beschreibung

Die Erfindung betrifft einen Wärmetauscher als Teil eines Fahrzeugheizgerätes mit einem Steuergerät mit Elektronik.

Aus der GB 2 116 809 A ist ein Wärmetauscher mit einer elektrischen Heizeinrichtung bekannt, bei der zwei aufeinandergestapelte Metallplatten den Wärmetauscher bilden. Die das zu erwärmende Medium leitenden Kanäle liegen in der Ebene der Platten und sind in diese eingelassen. Jeweils eine der Oberflächen der beiden Platten ist mit einem elektrischen Heizelement in Form einer isolierenden Platte mit elektrischen Leiterbahnen bedeckt, so dass Wärme erzeugt wird. Die elektrischen Heizelemente sowie die zugehörige Steuerelektronik sind in einem Randbereich der die elektrische Heizleitung tragenden elektrisch isolierenden Platten angeordnet.

Der vorliegenden Erfindung liegt die Aufgabe zugrunde, den Aufbau eines Wärmetauschers mit integriertem Temperatursensor, der in einem Fahrzeugheizgerät verwendet werden kann, zu vereinfachen.

Beschrieben wird ein Wärmetauscher mit einem Temperatursensor für ein Fahrzeugheizgerät. Der Wärmetauscher umfasst den Temperatursensor, eine Wärmeeintragsfläche, und ein auf der Wärmeeintragsfläche angeordnetes elektrisches Heizelement, das von dem Steuergerät gesteuert wird, sowie eine Wärmeaustragsfläche an der Wärme an ein zu erwärmendes Medium übertragen wird, wobei ein Wärmetauscherkörper des Wärmetauschers Rippen umfasst, die sich senkrecht zu der Wärmeeintragsfläche erstrecken und zumindest einen Kanal definieren, in dem das zu erwärmende Medium strömt. Der Temperatursensor ist in einer Vertiefung an der Wärmeaustragsfläche angeordnet. Das Steuergerät ist auf einer von der Wärmeeintragsfläche abgewandten Seite des Wärmetauschers angeordnet, wobei die Vertiefung in einer Richtung der Dicke des Wärmetauschers senkrecht zur Wärmeeintragsfläche ausgebildet ist. Durch die Anordnung des Temperatursensors in einer Vertiefung an der Wärmeaustragsfläche ist keine Aussparung von Freiflächen auf der Seite des Wärmetauscherkörpers erforderlich, auf der das elektrische Heizelement angeordnet wird. Bei vorgegebener Baugröße und vorgegebener geforderter Heizleistung des Wärmetauschers kann dementsprechend die Wärmeeintragsfläche größer gewählt werden, wodurch eine Flächenbelastung von ohmschen Leiterbahnen des elektrischen Heizelementes reduziert wird. Weiterhin wird ein das elektrische Heizelement steuerndes Steuergerät üblicherweise auf einer von dem elektrischen Heizelement abgewandten Seite des Wärmetauschers angeordnet, um die Wärmebelastung der in dem Steuergerät vorhandenen Elektronik zu reduzieren. Durch die Anordnung des Temperatursensors in einer Vertiefung an der Wärmeaustragsfläche kann dementsprechend die Länge der zur Kontaktierung des Temperatursensors erforderlichen Leitungen deutlich reduziert werden, da diese nicht um den Wärmetauscher herumgeführt werden müssen. Die vergleichsweise kurzen Leitungen reduzieren den Platzbedarf und verbessern die elektromagnetische Verträglichkeit durch ein kleineres Magnetfeld. Der Temperatursensor kann beispielsweise ein Hochvolt-Temperatursensor sein. Die Wärmeeintragsfläche und die Wärmeaustragsfläche können Oberflächen eines Wärmetauscherkörpers des Wärmetauschers sein, der beispielsweise eine äußere Form des Wärmetauschers im Wesentlichen bestimmt. Als Wärmeeintragsfläche des Wärmetauscherkörpers kann ein Oberflächenbereich des Wärmetauscherkörpers bezeichnet werden, an dem während des Betriebs eines den Wärmetauscher umfassenden Fahrzeugheizgerätes Wärme in den Wärmetauscherkörper ein- oder übertritt. Die Wärmeeintragsfläche kann beispielsweise eine Oberfläche des Wärmetauscherkörpers sein, an der ein elektrisches Heizelement angeordnet ist. Das elektrische Heizelement kann beispielsweise als Schichtheizelement ausgeführt sein. Als Wärmeaustragsfläche des Wärmetauschers kann eine Oberfläche des Wärmetauscherkörpers bezeichnet werden, an dem während des Betriebs des den Wärmetauscher umfassenden Heizgerätes Wärme an ein zu erwärmendes Medium übertragen wird. Der Wärmetauscherkörper des Wärmetauschers kann ein metallisches Material umfassen. Das metallische Material kann beispielsweise Aluminium oder eine Aluminiumlegierung sein, die gut wärmeleitend ist. Stromführende Bereiche des elektrischen Heizelementes können gegenüber der Wärmeeintragsfläche elektrisch isoliert sein. Es kann vorgesehen sein, dass eine elektrische Isolationsschicht direkt auf die Wärmeeintragsfläche des Wärmetauscherkörpers aufgebracht ist. Unter dem Ausdruck "direkt aufgebracht" kann im vorliegenden Fall insbesondere das Auftragen der elektrischen Isolationsschicht auf die Wärmeeintragsfläche des Wärmetauschers mit Hilfe eines thermischen Spritz- beziehungsweise Aufspritzverfahrens verstanden werden. Ein thermisches Spritzverfahren kann beispielsweise Plasmaspritzen, Kaltgasspritzen, Flammspritzen und/oder Suspensionsflammspritzen sein. Alternativ können auch andere Beschichtungsverfahren verwendet werden, die ebenfalls ein direktes Aufbringen/Auftragen einer elektrischen Isolationsschicht erlauben. Es kann vorgesehen sein, dass eine elektrische Heizschicht des elektrischen Heizelements direkt auf die elektrische Isolationsschicht aufgebracht ist. Auch die elektrische Heizschicht kann als dünne Schicht direkt auf die elektrische Isolationsschicht aufgebracht sein. Dabei können ebenfalls die vorstehend bereits genannten thermischen Spritz- beziehungsweise Aufspritzverfahren zum Aufbringen der elektrischen Heizschicht verwendet werden. Es kann vorgesehen sein, dass die elektrische Isolationsschicht eine keramische Schicht umfasst, insbesondere eine keramische Schicht aus Aluminiumoxid. Die elektrische Heizschicht und die elektrische Isolationsschicht können in einfacher Weise mit Hilfe der vorstehend genannten Spritz- beziehungsweise Aufspritzverfahren aufgetragen sein, wobei die elektrische Isolationsschicht mit dem Wärmetauscherkörper und die elektrische Heizschicht mit der elektrischen Isolationsschicht dauerhafte feste Verbindungen eingehen können. Es kann daher eine gute Wärmeübertragung zwischen der elektrischen Heizschicht, die auf die elektrische Isolationsschicht aufgetragen werden kann, und dem Wärmetauscherkörper im Bereich der Wärmeintragsfläche bestehen. Weiterhin ist eine keramische Schicht auch mechanisch stabil mit der Oberfläche des Wärmetauscherkörpers verbunden, um bei einer Erwärmung oder Abkühlung auftretende Spannungen zu kompensieren. Diese Eigenschaft kann insbesondere aus zumindest ähnlichen thermischen Ausdehnungskoeffizienten des Wärmetauscherkörpers und der isolierenden Schicht resultieren. Auch zwischen der elektrischen Heizschicht und der beispielsweise als keramische Schicht ausgebildeten elektrischen Isolationsschicht kann aufgrund ähnlicher Ausdehnungskoeffizienten eine ausreichende mechanische Stabilität bestehen. Es kann vorgesehen sein, dass die elektrische Heizschicht ein metallisches Material, insbesondere Nickel oder eine Nickellegierung umfasst. Nickel oder Nickellegierungen können leicht als ausreichend temperaturstabile ohmsche Heizwiderstände ausgebildet werden. Es kann vorgesehen sein, dass die elektrische Heizschicht in einer Schichtebene der elektrischen Heizschicht strukturiert ist und zumindest zwei voneinander unabhängige Widerstandsheizelemente umfasst. Auf diese Weise können mehrere voneinander unabhängige, als Schichtheizelemente ausgebildete Widerstandsheizelemente gemeinsam in wenigen, von der Anzahl der Widerstandsheizelemente unabhängigen Fertigungsschritten auf der Wärmeeintragsfläche des Wärmetauscherkörpers direkt aufgetragen werden. Einzelne Widerstandsheizelemente können beispielsweise in Form von Leiterbahnen in der elektrischen Heizschicht des elektrischen Heizelementes realisiert sein. Die Leiterbahnen können voneinander beabstandet angeordnet sein und jeweils eigene elektrische Anschlusskontakte aufweisen. Zur Vereinfachung der elektrischen Kontaktierung können die elektrischen Anschlusskontakte zusammengeführt werden und gemeinsam mit einer Spannungsquelle verbunden sein. Das elektrische Heizelement kann zur Regelung der Heizleistung beispielsweise pulsweitenmoduliert mit elektrischer Leistung versorgt werden. Das elektrische Heizelement kann als elektrisches Hochvoltheizelement ausgeführt sein. Ein solches elektrisches Hochvoltheizelement kann mit einer hohen Versorgungsspannung versorgt und betrieben werden. Die hohe Versorgungsspannung kann beispielsweise mindestens 100 Volt betragen. Die hohe Versorgungsspannung kann in einem als Hochvoltbereich bezeichneten Spannungsbereich liegen, der beispielsweise bei 100 Volt beginnen kann. Der Wärmetauscher kann beispielsweise als Wärmetauscher eines elektrischen Heizgerätes verwendet werden, welcher seinerseits für ein Elektro- oder Hybridfahrzeug verwendet werden kann. Das elektrische Heizelement kann für den Betrieb in einem Hochspannungsbordnetz eines Elektro- oder Hybridfahrzeugs geeignet sein. Das elektrische Heizelement kann insbesondere geeignet sein, direkt, das heißt ohne Zwischenschaltung von Spannungswandlern, die beispielsweise die dem elektrischen Heizelement aus dem Hochspannungsbordnetz maximal zuführbare Versorgungsspannung begrenzen, mit dem Hochspannungsbordnetz eines Elektro- oder Hybridfahrzeugs betriebsfähig verbunden werden. Die Vertiefung an der Wärmeaustragsfläche kann durch eine Materialschicht des Wärmetauscherkörpers von der Wärmeeintragsfläche getrennt sein. Die Materialschicht des Wärmetauscherkörpers kann sich beispielsweise durch ihre geringe Dicke auszeichnen. Die geringe Dicke der trennenden Materialschicht kann beispielsweise die zwei- bis dreifache Dicke der isolierenden Schicht betragen. Die Materialschicht kann beispielsweise zwischen 1,5 mm bis 3,5 mm, vorzugsweise 2,5 mm betragen. Die Vertiefung kann eine Tiefe aufweisen, die in Relation zur Dicke des Wärmetauschers mindestens der halben Dicke des Wärmetauschers entspricht. Vorzugsweise kann die Tiefe mindestens 2/3 der Dicke des Wärmetauschers betragen. Besonders bevorzugt beträgt die Tiefe 3/4 der Dicke des Wärmetauschers. Die Dicke des Wärmetauschers senkrecht zur Wärmeeintragsfläche kann allein durch die Dicke des Wärmetauscherkörpers bestimmt sein. Die Dicke des Wärmetauschers kann beispielsweise durch den kürzesten Abstands der Wärmeeintragsfläche zur Wärmeaustragsfläche senkrecht zur Wärmeintragsfläche gegeben sein.

Es kann vorgesehen sein, dass die Vertiefung als Sackloch ausgebildet ist. Ein Sackloch ist in einfacher Weise während der Herstellung des Wärmetauscherkörpers des Wärmetauschers erzeugbar. Das Sackloch kann beispielsweise als Bohrung in einem von der Erzeugung des Wärmetauscherkörpers unabhängigen Arbeitsschritt erzeugt werden oder, wenn der Wärmetauscherkörper in einem Guss-verfahren erzeugt wird, bereits während des Gießens durch entsprechend ausgeformte Gusswerkzeuge vorgesehen werden. Auch wenn das Sackloch durch entsprechend ausgeformte Gusswerkzeuge erzeugt wird, kann eine Nachbearbeitung des Sacklochs mittels Bohren vorgesehen sein. Andere dem Fachmann bekannte Verfahren zur Herstellung eines Sacklochs sind ebenfalls möglich. Sowohl der Durchmesser als auch die Dicke der Materialschicht, welche die als Sackloch ausgeführte Vertiefung von der Wärmeeintragsfläche trennt, sind leicht und präzise einstellbar. Weiterhin kann die Fläche, über die der Temperatursensor wärmeleitend mit dem Wärmetauscherkörper verbunden ist, über eine Bodenfläche des Sacklochs hinaus vergrößert werden. Beispielsweise kann auch eine Mantelfläche des Sacklochs wärmeleitend mit dem Temperatursensor verbunden sein und neben der Bodenfläche des Sacklochs zur thermischen Anbindung des Temperatursensors an den Wärmetauscherkörper genutzt werden. Es kann auch vorgesehen sein, dass der Temperatursensor in einer die Vertiefung ausfüllenden Hülse vergossen ist. Die die Vertiefung ausfüllende Hülse kann beispielsweise aus einem keramischen Material ausgebildet sein. Die Hülse kann beispielsweise stoffschlüssig oder formschlüssig oder kraftschlüssig in der Vertiefung angeordnet sein. Die Hülse kann beispielsweise eine elektrisch isolierende Schicht zwischen dem Temperatursensor und dem Wärmetauscherkörper ausbilden. Eine Wand- und Bodendicke der Hülse kann beispielsweise so bemessen sein, dass die erforderlichen Luft- und Kriechstrecken eingehalten werden. Das elektrische Heizelement und der Temperatursensor können also als während des Betriebs elektrisch getrennt angesehen werden. Die Hülse kann beispielsweise nach dem Ausformen der Vertiefung in der Vertiefung angeordnet werden oder direkt in der Vertiefung hergestellt werden. Das direkte Herstellen der Hülse in der Vertiefung kann beispielsweise mit Hilfe eines thermischen Spritz- beziehungsweise Aufspritzverfahrens erfolgen. Diese Verfahren wurden bereits im Zusammenhang mit der elektrischen Isolationsschicht genannt. Vorzugsweise wird die Hülse mit dem eingegossenen Temperatursensor separat gefertigt und als Baugruppe mechanisch in die Vertiefung eingeführt und befestigt. Eine zusätzliche Verklebung zwischen der Hülse und dem Wärmetauscherkörper in der Vertiefung kann zur Verbesserung der Wärmeübertragung und zur Fixierung der Hülse vorgesehen sein.

Es kann vorgesehen sein, dass die Wärmeaustragsfläche zumindest teilweise von den Rippen gebildet ist. Die Rippen können beispielsweise die Wärmeaustragsfläche vergrößern und zu diesem Zweck insbesondere im Wesentlichen senkrecht zur Wärmeeintragsfläche orientiert sein. Die Rippen können separat vom Rest des Wärmetauscherkörpers gefertigt sein und mit dem Rest des Wärmetauscherkörpers beispielsweise stoffschlüssig oder kraftschlüssig verbunden werden. Alternativ ist es auch möglich, die Rippen als integralen Bestandteil des Wärmetauscherkörpers zu fertigen, wobei beispielsweise ein dem Fachmann an sich bekanntes Guss- oder Fräsverfahren zur Anwendung gelangen kann.

Es kann weiterhin ein Deckel vorgesehen sein, der gemeinsam mit der Wärmeaustragsfläche den zumindest einen Kanal definiert, in dem das zu erwärmende Medium strömt. Das zu erwärmende Medium kann beispielsweise Wasser oder Luft sein. Der Kanal kann beispielsweise in einem gleichbleibenden Abstand von der Wärmeeintragsfläche verlaufen. Der Kanal kann beispielsweise mäanderförmig verlaufen. Die Kanäle können beispielsweise zumindest eine Umlenkung des zu erwärmenden Mediums umfassen, um die Länge des Kanals in der Nähe der Wärmeeintragsfläche zu vergrößern.

Es kann auch vorgesehen sein, dass der Deckel eine Öffnung umfasst, durch die der Temperatursensor in die Vertiefung einführbar ist. Auf diese Weise wird eine leichte Montage des Temperatursensors in der Vertiefung ermöglicht, welche insbesondere nach der eigentlichen Fertigung des Wärmetauscherkörpers und der Befestigung des Deckels an dem Wärmetauscherkörper erfolgen kann. Es kann vorgesehen sein, dass die Öffnung gegenüber dem Kanal durch eine Dichtvorrichtung abgedichtet ist. Auf diese Weise kann ein Austreten von zu erwärmendem Medium aus dem Kanal im Bereich des Temperatursensors verhindert werden. Die Dichtvorrichtung kann beispielsweise als Schweißnaht ausgeführt sein. Schweißnähte werden häufig bereits während der Herstellung des Wärmetauschers an anderen Stellen vorgesehen, so dass eine zusätzliche Schweißnaht keinen Fertigungsschritt erfordert, der vollständig von den übrigen Fertigungsschritten verschieden ist. Es ist auch denkbar, dass die Dichtvorrichtung in Form eines metallischen oder gummiartigen Dichtrings ausgeführt ist.

Die Erfindung wird nun mit Bezug auf die begleitenden Zeichnungen anhand bevorzugter Ausführungsformen beispielhaft erläutert.

Es zeigen:
- Figur 1: eine seitliche Schnittansicht eines Wärmetauschers mit Temperatursensor;
- Figur 2: eine seitliche Schnittansicht eines Wärmetauschers ohne angeordneten Temperatursensor:
- Figur 3: eine symbolhafte Darstellung eines Fahrzeugheizgeräts mit Wärmetauscher; und
- Figur 4: eine dreidimensionale Außenansicht eines mit Aussparungen auf dem Heizelement versehenen Wärmetauschers.

Bei der nachfolgenden Beschreibung der Zeichnungen bezeichnen gleiche Bezugszeichen gleiche oder vergleichbare Komponenten.

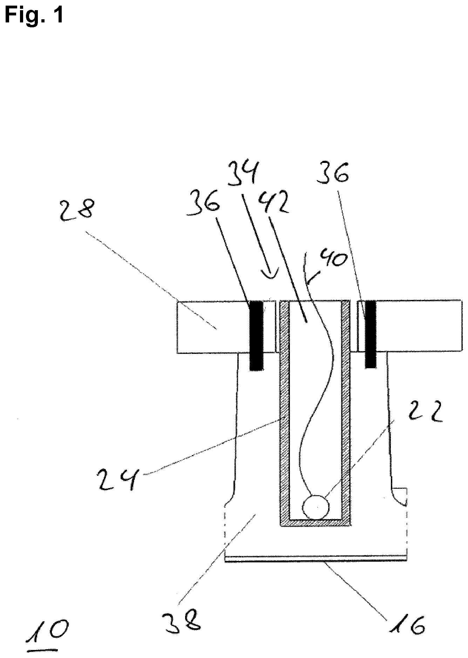

Figur 1 zeigt eine seitliche Schnittansicht eines Wärmetauschers mit Temperatursensor. Erkennbar ist ein Ausschnitt eines Wärmetauschers 10 in seitlicher Schnittansicht. Der Wärmetauscher 10 umfasst einen Wärmetauscherkörper 38, ein an dem Wärmetauscherkörper 38 angeordnetes elektrisches Heizelement 16 und einen Deckel 28. Der Deckel 28 ist, vom Heizelement 16 aus gesehen auf der gegenüberliegenden Seite des Wärmetauscherkörpers 38 angeordnet. Der Deckel 28 umfasst eine Öffnung 34. Der Deckel 28 und der Wärmetauscherkörper 38 sind über eine Dichtvorrichtung 36 dicht miteinander verbunden, so dass zwischen dem Wärmetauscherkörper 38 und dem Deckel 28 zu erwärmendes Medium im Wärmetauscher 10 zurückgehalten wird und insbesondere nicht im Bereich der Öffnung 34 des Deckels 28 aus dem Wärmetauscher 10 austreten kann. Die Dichtvorrichtung 36 kann beispielsweise als Schweißnaht oder als Dichtung ausgeführt sein. Der Wärmetauscherkörper 38 umfasst eine in Figur 1 nicht näher bezeichnete Vertiefung, in der eine Hülse 24 aufgenommen ist. Die Hülse 24 kann beispielsweise aus einem keramischen Material bestehen. Die Hülse 24 kann einen Temperatursensor 22 aufnehmen, welcher mit Hilfe eines Vergussmaterials 42 im Inneren der Hülse 24, insbesondere in einem Bodenbereich der Hülse 24, vergossen sein kann. Eine elektrische Kontaktierung 40 dient zum Anschluss des Temperatursensors 22 an eine in Figur 1 nicht dargestellte elektrische Steuerung. Die keramische Hülse 24 kann durch die Öffnung 34 im Deckel 28 in die nicht näher bezeichnete Vertiefung im Wärmetauscherkörper 38 eingeführt werden. Die Hülse 24 kann beispielsweise formschlüssig oder kraftschlüssig oder stoffschlüssig mit dem Wärmetauscherkörper 38 verbunden sein. Die Hülse 24 kann in der Vertiefung verklebt sein, um eine Fixierung und eine besonders gut wärmeleitende Verbindung zwischen dem Wärmetauscherkörper 38 und der Hülse zu erzeugen. Die Hülse 24 kann alternativ auch durch direktes Auftragen in der Vertiefung des Wärmetauscherkörpers 38 hergestellt werden, wobei ein dem Fachmann an sich bekanntes thermisches Spritz- oder Aufspritzverfahren genutzt werden kann. Das Vergussmaterial 42 kann beispielsweise ein gut wärmeleitendes Harz sein. Die Hülse 24 kann eine elektrische Isolierung des Temperatursensors 22 gegenüber dem restlichen Wärmetauscher 10 realisieren. Das Vergussmaterial 42 kann zu der elektrischen Isolierung beitragen. Das elektrische Heizelement 16 kann auf dem Wärmetauscherkörper 38 befestigt oder durch direktes Auftragen mit einem thermischen Spritz- oder Aufspritzverfahren direkt auf dem Wärmetauscherkörper 38 hergestellt sein.

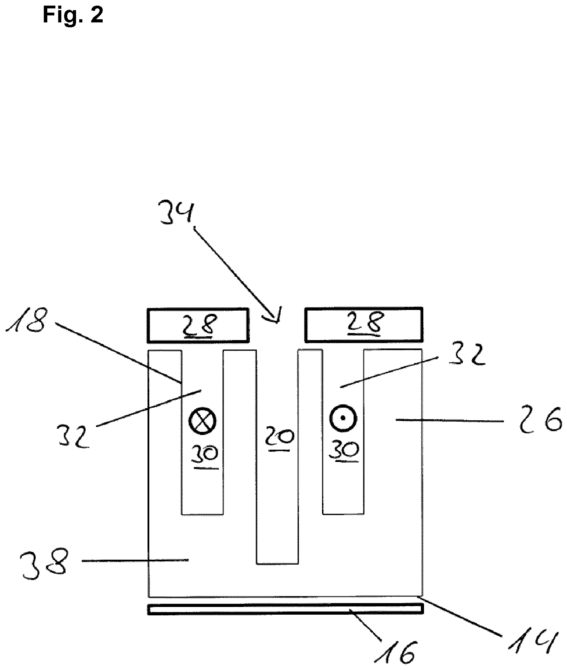

Figur 2 zeigt eine seitliche Schnittansicht eines Wärmetauschers ohne Temperatursensor. Das elektrische Heizelement 16 ist an einer Wärmeeintragsfläche 14 angeordnet, wobei der in Figur 2 erkennbare Abstand nur der besseren Übersicht halber in der Ansicht eingefügt ist. Auf der gegenüberliegenden Seite des Wärmetauscherkörpers 38 ist der Deckel 28 angeordnet, der die Öffnung 34 aufweist, durch welche ein Zugriff in eine Vertiefung 20 möglich ist. Auch der Abstand zwischen dem Wärmetauscherkörper 38 und dem Deckel 28 dient nur der besseren Übersicht. Die Vertiefung 20 ist für die Aufnahme des aus Figur 1 bereits bekannten Temperatursensors 22 vorgesehen. Der Wärmetauscherkörper 38 umfasst Rippen 26, die sich im Wesentlichen senkrecht zu der Wärmeeintragsfläche 14 erstrecken und zumindest einen Kanal 30 definieren, in dem ein zu erwärmendes Medium 32 strömt. Eine Strömungsrichtung des Mediums 32 ist durch die Symbole angedeutet. Die angedeutete Strömungsrichtung verläuft bei der in Figur 2 gewählten Ansicht senkrecht zur Blattebene. Die in Figur 1 dargestellte Dichtvorrichtung 36, die in Figur 2 nicht dargestellt ist, dichtet zwischen dem Deckel 28 und dem Wärmetauscherkörper 38 derart, dass ein Austritt des zu erwärmenden Mediums 32 an der Öffnung 34 des Deckels 28 wirksam verhindert wird. Zwischen der Vertiefung 20 und der Wärmeeintragsfläche 14 liegt eine verhältnismäßig dünne Materialschicht des Wärmetauscherkörpers 38, so dass eine Erfassung der Temperatur durch den in der Vertiefung 20 anzuordnenden Temperatursensor aufgrund der guten Wärmeleitfähigkeit des Wärmetauscherkörpers 38 im Wesentlichen der Temperatur des Heizelementes 16 entspricht. Die Rippen 26 können eine mehrfache Umlenkung des zu erwärmenden Mediums 32 vorsehen, so dass die effektive Länge des zumindest einen Kanals 30 im Bereich der Wärmeeintragsfläche 14 vergrößert ist.

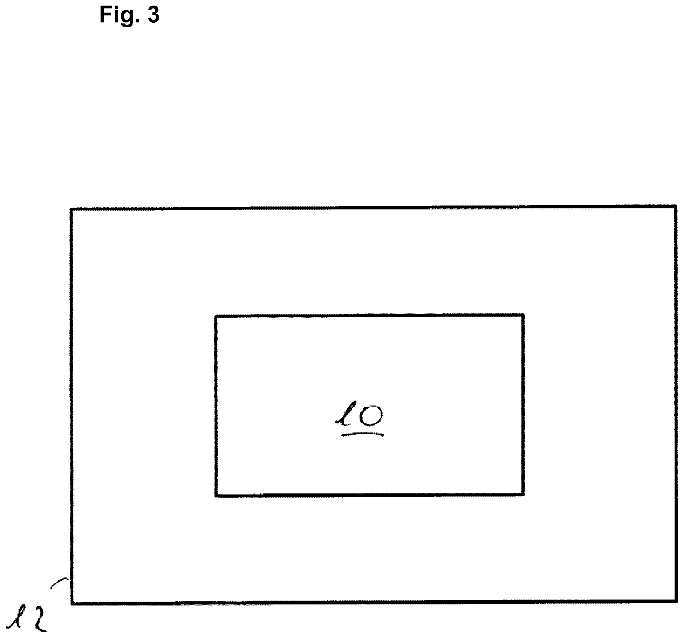

Figur 3 zeigt eine symbolische Darstellung eines Fahrzeugheizgerätes mit einem Wärmetauscher. Das in Figur 3 dargestellte Fahrzeugheizgerät 12 umfasst einen Wärmetauscher 10, wie er im Zusammenhang mit den Figuren 1 und 2 beispielhaft beschrieben ist. Das in

Figur 3 symbolisch dargestellte Fahrzeugheizgerät 12 kann neben dem Wärmetauscher 10 beispielsweise auch ein nicht dargestelltes Steuergerät umfassen.

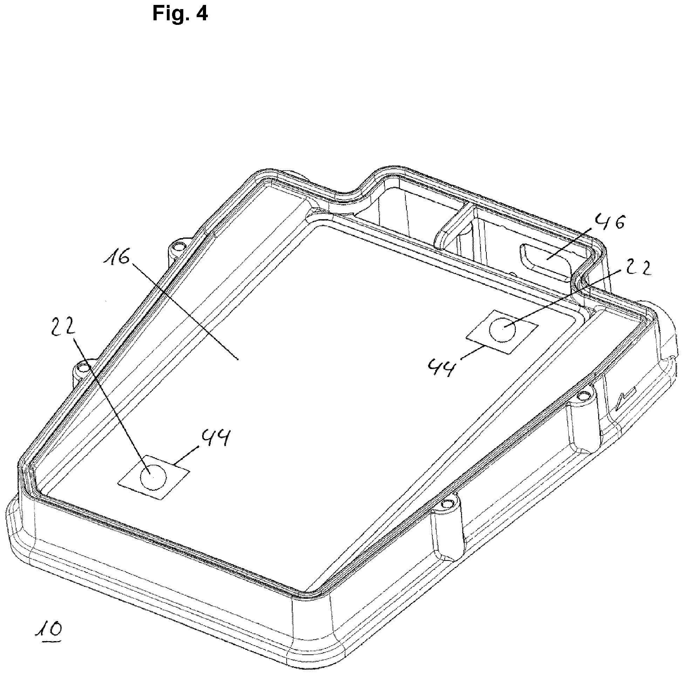

Figur 4 zeigt eine dreidimensionale Außenansicht eines mit Aussparungen auf dem Heizelement versehenen Wärmetauschers, welcher nicht Teil der Erfindung ist. Der in Figur 4 dargestellte Wärmetauscher 10 ähnelt den im Zusammenhang mit den Figuren 1 und 2 beschriebenen Wärmetauschern 10. Beispielsweise können die Grundform und die äußeren Abmessungen des in Figur 4 dargestellten Wärmetauschers in identischer Weise auch bei den im Zusammenhang mit den Figuren 1 und 2 beschriebenen Wärmetauschern 10 vorgesehen sein. Allerdings ist der Temperatursensor 22 bei dem in Figur 4 dargestellten Wärmetauscher 10 in Aussparungen 44 angeordnet, die auf der Seite des Wärmetauschers 10 liegen, auf der auch das elektrische Heizelement 16 angeordnet ist. Die Aussparungen 44 reduzieren dementsprechend die für das elektrische Heizelement 16 verfügbare Fläche auf dem Wärmetauscher 10 und verkleinern somit effektiv die Wärmeeintragsfläche. Die Temperatursensoren 22 sind in der Ebene der Aussparungen 44 flächig mit dem Wärmetauscher 10 wärmeleitend verbunden. Ein in Figur 4 nicht dargestelltes Steuergerät ist üblicherweise auf der in Figur 4 nicht sichtbaren Rückseite des Wärmetauschers 10 angeordnet. Eine elektrische Kontaktierung der Temperatursensoren 22 ist dementsprechend über einen Kabeldurchlass 46 erforderlich, so dass lange Leitungen um den Wärmetauscher 10 herumgeführt werden müssen. Auch diese spezielle Anordnung des Steuergerätes auf der dem Heizelement 16 gegenüberliegenden Seite des Wärmetauschers 10 kann im Zusammenhang mit den in Figur 1 und 2 beschriebenen Wärmetauschern 10 vorgesehen sein.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Wärmetauscher
- 12: Fahrzeugheizgerät
- 14: Wärmeintragsfläche
- 16: Heizelement
- 18: Wärmeaustragsfläche
- 20: Vertiefung
- 22: Temperatursensor
- 24: Hülse
- 26: Rippen
- 28: Deckel
- 30: Kanal
- 32: Medium
- 34: Öffnung
- 36: Dichtvorrichtung
- 38: Wärmetauscherkörper
- 40: Kontaktierung
- 42: Vergussmaterial
- 44: Aussparung
- 46: Kabeldurchlass

## Patentansprüche

1. Fahrzeugheizgerät (12) umfassend ein Steuergerät mit Elektronik und einen Wärmetauscher (10) mit einem Temperatursensor (22) für ein Fahrzeugheizgerät (12), wobei der Wärmetauscher (10) umfasst
- den Temperatursensor (22),
- eine Wärmeeintragsfläche (14),
- ein auf der Wärmeeintragsfläche (14) angeordnetes elektrisches Heizelement (16), das von dem Steuergerät gesteuert wird, und
- eine Wärmeaustragsfläche (18), an der Wärme an ein zu erwärmendes Medium (32) übertragen wird,
wobei ein Wärmetauscherkörper (38) des Wärmetauschers (10) Rippen (26) umfasst, die sich senkrecht zu der Wärmeeintragsfläche (14) erstrecken und zumindest einen Kanal (30) definieren, in dem das zu erwärmende Medium (32) strömt,
**dadurch gekennzeichnet, dass** der Temperatursensor in einer Vertiefung (20) an der Wärmeaustragsfläche (18) angeordnet ist und dass das Steuergerät auf einer von der Wärmeeintragsfläche (14) abgewandten Seite des Wärmetauschers (10) angeordnet ist, wobei die Vertiefung (20) in einer Richtung der Dicke des Wärmetauschers (10) senkrecht zur Wärmeeintragsfläche (14) ausgebildet ist.

2. Fahrzeugheizgerät (12) nach Anspruch 1, **dadurch gekennzeichnet, dass** die Vertiefung (20) als Sackloch ausgebildet ist.

3. Fahrzeugheizgerät (12) nach Anspruch 1 oder 2, **dadurch gekennzeichnet, dass** der Temperatursensor (22) in einer die Vertiefung (20) ausfüllenden Hülse (24) vergossen ist.

4. Fahrzeugheizgerät (12) nach Anspruch 3, **dadurch gekennzeichnet, dass** die Hülse (24) aus einem keramischen Material ausgebildet ist.

5. Fahrzeugheizgerät (12) nach Anspruch 3 oder 4, **dadurch gekennzeichnet, dass** die Hülse (24) stoffschlüssig und/oder formschlüssig und/oder kraftschlüssig in der Vertiefung (20) angeordnet ist.

6. Fahrzeugheizgerät (12) nach einem der vorhergehenden Ansprüche, **dadurch gekennzeichnet, dass** die Wärmeaustragsfläche (18) zumindest teilweise von den Rippen (26) gebildet wird.

7. Fahrzeugheizgerät (12) nach einem der vorhergehenden Ansprüche, **dadurch gekennzeichnet, dass** ein Deckel (28) vorgesehen ist, der gemeinsam mit der Wärmeaustragsfläche (18) den zumindest einen Kanal (30) definiert, in dem das zu erwärmendes Medium (32) strömt.

8. Fahrzeugheizgerät (12) nach Anspruch 7, **dadurch gekennzeichnet, dass** der Deckel (28) eine Öffnung (34) umfasst, durch die der Temperatursensor (22) in die Vertiefung (20) einführbar ist.

9. Fahrzeugheizgerät (12) nach Anspruch 8, **dadurch gekennzeichnet, dass** die Öffnung (34) gegenüber dem Kanal (30) durch eine Dichtvorrichtung (36) getrennt ist.

## Claims

1. Vehicle heating device (12) comprising a control device with electronic and a heat exchanger (10) having a temperature sensor (22) for a vehicle heating device (12), wherein the heat exchanger (10) comprises
- the temperature sensor (22),
- a heat input surface (14),
- an electrical heating element (16) controlled by the control device and arranged on the heat input surface (14), and
- a heat output surface (18), at which heat is transmitted to a medium (32) which is to be heated up,
wherein a heat exchanger body (38) of the heat exchanger (10) comprises fins (26) which extend substantially perpendicular to the heat input surface (14) and define at least one duct (30) in which the medium (32) flows, **characterized in that** the temperature sensor is arranged in a depression (20) on the heat output surface (18), and that the control device is arranged on a heat exchanger side facing away from the electrical heating element (16), wherein the depression (20) is formed in a direction of thickness of the heat exchanger perpendicular to the heat input surface.

2. The vehicle heating device (12) as claimed in claim 1, **characterized in that** the depression (20) is designed as a blind hole.

3. The vehicle heating device (12) as claimed in claim 1 or 2, **characterized in that** the temperature sensor (22) is cast in a sleeve (24) which fills the depression (20).

4. The vehicle heating device (12) as claimed in claim 3, **characterized in that** the sleeve (24) is formed from a ceramic material.

5. The vehicle heating device (12) as claimed in claim 3 or 4, **characterized in that** the sleeve (24) is arranged in the depression (20) in an integrally bonded and/or form-fitting and/or force-fitting manner.

6. The vehicle heating device (12) as claimed in one of the preceding claims, **characterized in that** the heat output surface (18) is at least partially formed by fins (26).

7. The vehicle heating device (12) as claimed in one of the preceding claims, **characterized in that** a cover (28) is provided which, together with the heat output surface (18), defines at least one duct (30) in which a medium (32) which is to be heated can flow.

8. The vehicle heating device (12) as claimed in claim 7, **characterized in that** the cover (28) comprises an opening (34) through which the temperature sensor (22) is insertable into the depression (20).

9. The vehicle heating device (12) as claimed in claim 8, **characterized in that** the opening (34) is separated from the duct (30) by a sealing device (36).

## Revendications

1. Appareil de chauffage pour véhicule (12) comprenant un contrôleur doté d'une électronique et un échangeur de chaleur (10) doté d'un capteur de température (22) pour un appareil de chauffage pour véhicule (12), l'échangeur de chaleur (10) comportant
- le capteur de température (22),
- une surface d'apport de chaleur (14),
- un élément chauffant électrique (16) disposé sur la surface d'apport de chaleur (14), lequel est commandé par le contrôleur, et
- une surface d'émission de chaleur (18) au niveau de laquelle la chaleur est transmise à un fluide (32) à chauffer,
un corps d'échangeur de chaleur (38) de l'échangeur de chaleur (10) comportant des ailettes (26) qui s'étendent perpendiculairement à la surface d'apport de chaleur (14) et définissent au moins un canal (30) dans lequel s'écoule le fluide (32) à chauffer,
**caractérisé en ce que** le capteur de température est disposé dans une cavité (20) au niveau de la surface d'émission de chaleur (18) et **en ce que** le contrôleur est disposé sur un côté de l'échangeur de chaleur (10) à l'opposé de la surface d'apport de chaleur (14), la cavité (20) étant formée perpendiculairement à la surface d'apport de chaleur (14) dans un sens de l'épaisseur de l'échangeur de chaleur (10).

2. Appareil de chauffage pour véhicule (12) selon la revendication 1, **caractérisé en ce que** la cavité (20) est réalisée sous la forme d'un trou borgne.

3. Appareil de chauffage pour véhicule (12) selon la revendication 1 ou 2, **caractérisé en ce que** le capteur de température (22) est scellé dans une douille (24) qui remplit la cavité (20).

4. Appareil de chauffage pour véhicule (12) selon la revendication 3, **caractérisé en ce que** la douille (24) est formée à partir d'un matériau céramique.

5. Appareil de chauffage pour véhicule (12) selon la revendication 3 ou 4, **caractérisé en ce que** la douille (24) est disposée dans la cavité (20) par fusion de matières et/ou par complémentarité de formes et/ou par assemblage de force.

6. Appareil de chauffage pour véhicule (12) selon l'une des revendications précédentes, **caractérisé en ce que** la surface d'émission de chaleur (18) est au moins partiellement formée par les ailettes (26).

7. Appareil de chauffage pour véhicule (12) selon l'une des revendications précédentes, **caractérisé en ce qu'**un couvercle (28) est présent, qui, en association avec la surface d'émission de chaleur (18), définit l'au moins un canal (30) dans lequel s'écoule le fluide (32) à chauffer.

8. Appareil de chauffage pour véhicule (12) selon la revendication 7, **caractérisé en ce que** le couvercle (28) possède une ouverture (34) à travers laquelle le capteur de température (22) peut être introduit dans la cavité (20).

9. Appareil de chauffage pour véhicule (12) selon la revendication 8, **caractérisé en ce que** l'ouverture (34) est séparée par un dispositif d'étanchéité (36) par rapport au canal (30).
